# EUROPÄISCHE PATENTANMELDUNG

(11) **EP 1 523 161 A1**
(43) Veröffentlichungstag der Anmeldung: **13.04.2005**
(21) Anmeldenummer: 04024003.8
(22) Anmeldetag: 08.10.2004
(51) Int. Cl.: H04M 1/725

(54) **Informations- und Kommunikationsgerät**

(30) Priorität: 08.10.2003 DE 10346660
(71) Anmelder: AUDI AG, 85045 Ingolstadt (DE)
(72) Erfinder: Remlinger, Wolfram, 85049 Ingolstadt (DE)
(74) Vertreter: Thielmann, Frank

(57) **Zusammenfassung**

Informations- und Kommunikationsgerät mit einer Mobiltelefoneinheit und einem Terminkalender zum Speichern und Abrufen von Informationen, wobei die Mobiltelefoneinheit (5) in Abhängigkeit der in dem Terminkalender gespeicherten Informationen steuerbar ist, wobei die Mobiltelefoneinheit (5) zusätzlich in Abhängigkeit von fahrzustandspezifischen Informationen eines Fahrzeugs steuerbar ist.

## Beschreibung

Die Erfindung betrifft ein Informations- und Kommunikationsgerät mit einer Mobiltelefoneinheit und einem Terminkalender zum Speichern und Abrufen von Informationen.

Informationsgeräte mit einem Terminkalender sind insbesondere als tragbare Geräte verbreitet, die die bisher verwendeten Notizbücher ersetzen können. Neben der Möglichkeit, Informationen zu speichern und abzurufen ist es auch möglich, Texte oder Zahlentabellen einzugeben, die nach der Übertragung an ein anderes Gerät wie einen Personalcomputer dort weiterbearbeitet werden können. Zum Eingeben der Informationen ist in den meisten Fällen das Display des Informationsgeräts berührungssensitiv, wobei entweder eine Tastatur auf dem Display in der Form einer virtuellen Tastatur nachgeahmt wird oder die Informationseingabe erfolgt über die Erkennung der Handschrift des Benutzers. Gleichermaßen kann eine herkömmliche Tastatur, insbesondere eine Minitastatur benutzt werden oder es ist eine Spracheingabe vorgesehen.

Seit einigen Jahren sind auch integrierte Informations- und Kommunikationsgeräte auf dem Markt, die neben dem Terminkalender eine Mobiltelefoneinheit aufweisen, so dass das Gerät auch als Handy benutzt werden kann.

Von Personen, die sowohl die Terminkalenderfunktion als auch die Handyfunktion des Informations- und Kommunikationsgeräts intensiv nutzen, werden eingehende Anrufe häufig als störend empfunden, z.B. wenn sich der Angerufene in einer Besprechung befindet. In diesen Fällen besteht zwar die Möglichkeit, das Handy auszuschalten oder auf einen Anrufbeantworter umzuleiten, diese Maßnahme wird jedoch in den meisten Fällen vergessen oder ebenfalls als lästig empfunden. Außerdem besteht das Problem, dass das Wiedereinschalten anschließend leicht vergessen wird. Zudem erhält der auf den Anrufbeantworter umgeleitete oder abgewiesene Anrufer keine Information über den Zeitpunkt der Wiedererreichbarkeit.

Der Erfindung liegt daher das Problem zugrunde, ein Informations- und Kommunikationsgerät zu schaffen, das die genannten Nachteile vermeidet und benutzerfreundlicher ist.

Zur Lösung dieses Problems ist bei einem Informations- und Kommunikationsgerät der eingangs genannten Art erfindungsgemäß vorgesehen, dass die Mobiltelefoneinheit in Abhängigkeit der in dem Terminkalender gespeicherten Informationen steuerbar ist.

Anders als bei bekannten Geräten ist bei dem erfindungsgemäßen Informations- und Kommunikationsgerät ein Zusammenwirken der Mobiltelefoneinheit und des Terminkalenders vorgesehen, um das Gerät besser an die Bedürfnisse des Benutzers anzupassen und ihn von umständlichen Eingaben zu entlasten. Die Mobiltelefoneinheit wird mit in dem Terminkalender gespeicherten Informationen derart verknüpft, dass sie durch diese Informationen gesteuert wird. Auf diese Weise werden die von dem Benutzer gespeicherten Informationen beim Betrieb der Mobiltelefoneinheit berücksichtigt. Da diese Verknüpfung automatisch stattfinden kann, sind keine Eingaben oder Eingriffe seitens des Benutzers erforderlich, so dass diese Funktionalität äußerst benutzerfreundlich und komfortabel ist.

Die Erfindung lässt sich mit besonderem Vorteil einsetzen, wenn eine Information ein Termin ist. Der Begriff "Termin" ist weit zu verstehen, neben konkreten Terminen mit Datums- und Zeitangabe können auch Zeiträume wie "Freitagnachmittag" als Information gespeichert werden, so dass die Mobiltelefoneinheit während dieses Zeitraums auf eine bestimmte, vom Benutzer festgelegte Weise steuerbar ist.

Bei dem erfindungsgemäßen Informations- und Kommunikationsgerät kann es vorgesehen sein, dass einer Information, gegebenenfalls einem Termin, wenigstens eine Funktion zur Steuerung der Mobiltelefoneinheit zuordenbar oder zugeordnet ist. Jedem Termin oder jeder Information kann individuell eine Steuerungsfunktion zugeordnet werden. Der Betrieb der Mobiltelefoneinheit erfolgt somit extrem flexibel und an die Bedürfnisse des Benutzers angepasst. Die Zuordnung einer Funktion zu einer Information kann dabei automatisch erfolgen, alternativ ist es jedoch auch möglich, die Funktion manuell einzugeben.

Um die Handhabung und Bedienung des erfindungsgemäßen Informationsund Kommunikationsgeräts weiter zu vereinfachen kann es auch vorgesehen sein, dass Informationen in verschiedene Tätigkeitsgruppen klassifizierbar sind und jeder Tätigkeitsgruppe wenigstens eine Funktion zur Steuerung der Mobiltelefoneinheit zugeordnet ist. Zweckmäßig werden ähnliche Informationen, die Termine des Benutzers darstellen können, in einer Tätigkeitsgruppe zusammengefasst. Dieser Tätigkeitsgruppe wird eine Funktion, gegebenenfalls auch mehrere Funktionen zur Steuerung der Mobiltelefoneinheit zugeordnet. Es kann vorgesehen sein, dass die jeweiligen Tätigkeitsgruppen, die mit den Informationen verknüpft sind, bei der Eingabe der Informationen vom Benutzer ausgewählt werden oder vom Gerät automatisch zugeordnet werden.

Es empfiehlt sich, bei dem erfindungsgemäßen Informations- und Kommunikationsgerät zumindest eine oder mehrere der folgenden Tätigkeitsgruppen vorzusehen: Besprechung, Autofahrt, Bahnfahrt, Flug, Büro, Freizeit. Jede Information beziehungsweise jeder Termin lässt sich einer der aufgezählten Tätigkeitsgruppen zuordnen, die wiederum mit einer oder mehreren Funktionen zur Steuerung der Mobiltelefoneinheit verknüpft ist. In weiterer Ausgestaltung der Erfindung kann es vorgesehen sein, dass diese Tätigkeitsgruppen durch den Benutzer ergänzt oder geändert werden können. Jeder Benutzer kann entsprechend seinen Bedürfnissen weitere Tätigkeitsgruppen hinzufügen, die ebenfalls mit Funktionen zur Steuerung der Mobiltelefoneinheit verknüpft werden können.

Bei dem erfindungsgemäßen Informations- und Kommunikationsgerät können beispielsweise eine oder mehrere der folgenden Funktionen zur Steuerung der Mobiltelefoneinheit vorgesehen sein: Anrufweiterschaltung, Umleitung auf einen Anrufbeantworter, Ausgeben einer Sprachnachricht an den Anrufer, Speichern der Rückrufnummer des Anrufers, Stummschaltung des Anrufsignals, Filterung von Anrufen, Senden einer Textmitteilung an den Anrufer, automatischer Rückruf des Anrufers, automatische Rufannahme, Anpassung der Lautstärke. Grundsätzlich können sämtliche vorhandenen Funktionen zur Steuerung der Mobiltelefoneinheit mit Informationen, Terminen beziehungsweise Tätigkeitsgruppen verknüpft werden. Eine noch höhere Flexibilität und Benutzerfreundlichkeit lässt sich dadurch erzielen, dass die Zuordnung einer Funktion zu einer Tätigkeitsgruppe benutzerseitig einstellbar ist. Ferner können die Funktionen benutzerseitig programmierbar sein, das heißt der Benutzer kann selbst neue Funktionen zusammenstellen. Die einzelnen Funktionen lassen sich ähnlich wie Befehlsmakros auch zu Gruppen zusammenstellen, so dass bei einem bestimmten Termin mehrere Funktionen ablaufen.

Um das erfindungsgemäße Informations- und Kommunikationsgerät noch individueller zu nutzen kann es vorgesehen sein, dass eine Tätigkeitsgruppe Untergruppen umfasst, denen untergruppenspezifische Funktionen zuordenbar oder zugeordnet sind. Beispielsweise kann die Tätigkeitsgruppe "Auto-fahrt" verschiedene Untergruppen umfassen, denen jeweils spezielle Funktionen zugeordnet sind. Eine dieser Untergruppen kann gewählt werden, wenn der Benutzer während einer Autofahrt zur Entgegennahme des Anrufs bereit ist. In anderen Situationen, z.B. bei schneller Autobahnfahrt oder wenn der Fahrer mit der Navigation beschäftigt ist, kann ein eingehender Anruf unerwünscht sein, so dass dieser automatisch an den Anrufbeantworter weitergeleitet wird. Gleichzeitig kann z.B. die Funktion "Anpassen der Lautstärke" ausgewählt sein, so dass das Gerät seine Lautstärke an die während der Autofahrt erhöhte Umgebungslautstärke anpasst.

Eine besonders zweckmäßige Einsatzmöglichkeit ergibt sich für das erfindungsgemäße Informations- und Kommunikationsgerät, wenn es für den Betrieb in einem Kraftfahrzeug vorgesehen ist und über eine Schnittstelle Daten mit einer Fahrzeugsteuereinheit austauschen kann. Die Fahrzeugsteuereinheit kann ein einzelnes Steuergerät des Kraftfahrzeugs sein, es ist jedoch auch möglich, dass das erfindungsgemäße Gerät mit mehreren unterschiedlichen Steuergeräten des Kraftfahrzeugs Daten austauschen kann. Das erfindungsgemäße Gerät kann auch mit einem Steuergerät oder Rechner eines Automatic Cruise Control-Systems des Fahrzeugs verbunden werden. Erfindungsgemäß kann das erfindungsgemäße Informations- und Kommunikationsgerät zum Empfangen von von der Fahrzeugsteuereinheit gesendeten fahrzustandspezifischen Informationen ausgebildet sein, wobei die Mobiltelefoneinheit in Abhängigkeit dieser Informationen steuerbar ist.

Die fahrzustandspezifischen Informationen umfassen zweckmäßig eine oder mehrere der folgenden Informationen: Geschwindigkeit, Beschleunigung, Verkehrssituation, Abstand zu anderen Fahrzeugen, Bedienvorgänge des Fahrers, Witterungsbedingungen, Lautstärke.

Der besondere Vorteil dieser Erfindungsausgestaltung liegt darin, dass die fahrzustandspezifischen Informationen dem erfindungsgemäßen Informations- und Kommunikationsgerät automatisch über die Schnittstelle übermittelt werden, so dass keine manuellen Bedieneingaben des Benutzers erforderlich sind. Wenn das Gerät z.B. feststellt, dass bei der aktuellen Geschwindigkeit und dem aktuellen erfassten Abstand zu einem anderen Fahrzeug das Führen eines Mobiltelefongesprächs zu riskant wäre, wird es den Anruf beispielsweise automatisch umleiten. Gleichzeitig kann dem Anrufenden eine Nachricht übermittelt werden und seine Telefonnummer kann gespeichert werden, so dass der Fahrer den Anrufer zu einem späteren Zeitpunkt zurückrufen kann.

Die Erfindung betrifft ferner ein Kraftfahrzeug. Erfindungsgemäß ist vorgesehen, dass das Kraftfahrzeug ein Informations- und Kommunikationsgerät der beschriebenen Art aufweist.

Weitere Vorteile und Einzelheiten der Erfindung werden anhand eines Ausführungsbeispiels unter Bezugnahme auf die Zeichnungen erläutert. Dabei zeigt:
- Fig. 1: ein herkömmliches Informations- und Kommunikationsgerät;
- Fig. 2: den schematischen Aufbau eines erfindungsgemäßen Informations- und Kommunikationsgeräts; und
- Fig. 3: das Informations- und Kommunikationsgerät von Fig. 2 während des Betriebs in einem Kraftfahrzeug.

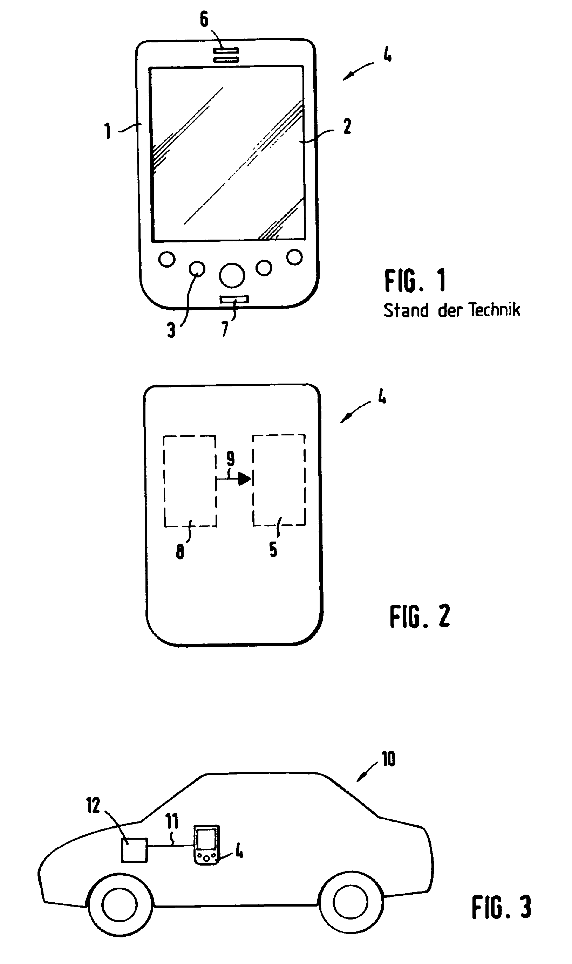

Das in Fig. 1 gezeigte herkömmliche Informations- und Kommunikationsgerät besteht im Wesentlichen aus einem Gehäuse 1, einem LCD-Display 2 und mehreren auf der Vorderseite des Gehäuse 1 angeordneten Eingabetasten 3. Das LCD-Display 2 ist berührungssensitiv, so dass Eingaben des Benutzers über das Display 2 vorgenommen werden können. Ferner kann der Benutzer mit einem in Fig. 1 nicht gezeigten Stift auf dem Display 2 schreiben. Diese Eingaben werden durch eine Funktion zur Erkennung der Handschrift ausgewertet, entsprechend verarbeitet und gespeichert. Das Informationsund Kommunikationsgerät 4 weist in seinem Inneren einen Mikrocomputer zur Steuerung der Gerätefunktionen auf und besitzt eine Terminkalenderfunktion zum Speichern und Abrufen von Informationen. Das Gerät 4 kann wie ein Notizbuch benutzt werden und es lassen sich vielfältige Informationen, insbesondere Termine speichern. Über eine Schnittstelle kann der Terminkalender z.B. mit einem auf einem Büro-PC gespeicherten Terminkalender synchronisiert werden. Weiterhin besitzt das Informations- und Kommunikationsgerät 4 eine Mobiltelefoneinheit 5, an die ein auf der Vorderseite des Gehäuses 1 angeordneter Lautsprecher 6 und ein Mikrofon 7 angeschlossen sind. Daher kann das Gerät 4 auch als Mobiltelefon benutzt werden.

Fig. 2 zeigt den schematischen Aufbau des erfindungsgemäßen Informations- und Kommunikationsgeräts 4. Das erfindungsgemäße Informations- und Kommunikationsgerät 4 weist äußerlich alle Merkmale des in Fig. 1 dargestellten herkömmlichen Geräts auf, weshalb gleiche Bauteile mit denselben Bezugszeichen bezeichnet werden.

Wie in Fig. 2 zu erkennen ist, umfasst das Informations- und Kommunikationsgerät 4 einen schematisch dargestellten Datenspeicher 8 zum Speichern von Informationen und Terminen. Ferner sind in dem Datenspeicher 8 die einzelnen Funktionen abgelegt, die den Terminen zugeordnet sind. Diese Funktionen dienen zur Steuerung der Mobiltelefoneinheit 5, was durch den Pfeil 9 symbolisiert wird.

Jeder in dem Datenspeicher 8 gespeicherten Information, insbesondere jedem Termin kann eine Funktion zur Steuerung der Mobiltelefoneinheit 5 zugeordnet werden. An dem durch den Termin angegebenen Zeitpunkt werden die mit dem Termin verknüpften Funktionen ausgeführt und die Mobiltelefoneinheit 5 entsprechend gesteuert. Wenn der Benutzer in den Terminkalender z.B. "9.00 - 10.30 Besprechung" eingibt, werden während dieses Zeitraums eingehende Anrufe auf den Anrufbeantworter umgeleitet, gleichzeitig wird an einen Anrufer die Sprachnachricht "Ich bin in einer Besprechung und telefonisch nicht erreichbar" ausgegeben.

Fig. 3 zeigt das in Fig. 2 gezeigte Informations- und Kommunikationsgerät während des Betriebs in einem Kraftfahrzeug.

Das Informations- und Kommunikationsgerät 4 ist in dem Kraftfahrzeug 10 installiert und kann über eine als Verbindungskabel ausgebildete Schnittstelle 11 Daten mit einer Fahrzeugsteuereinheit austauschen. Es ist auch möglich, dass die Schnittstelle drahtlos, z.B. als Funkverbindung oder Infrarotverbindung ausgebildet ist. Die Fahrzeugsteuereinheit 12 kann ein Bordcomputer des Kraftfahrzeugs 10 sein, ebenso kann das Gerät 4 mit einem Steuergerät eines Automatic Cruise Control-Systems gekoppelt werden. In jedem Fall hat das fahrzeugseitige Gerät Zugang zu fahrzustandspezifischen Informationen. Diese fahrzustandspezifischen Informationen umfassen beispielsweise Geschwindigkeit, Beschleunigung, Verkehrssituation, Abstand zu anderen Fahrzeugen, Bedienvorgänge des Fahrers, Witterungsbedingungen, Lautstärke. Es ist auch möglich, den aktuellen Zustand des Fahrers durch die Ermittlung und/oder die Abfrage des "Belastungsgrads" zu berücksichtigen, der durch einen Zahlenwert ausgedrückt werden kann. Grundsätzlich kommen alle Informationen in Frage, die von der Fahrzeugsteuereinheit 12 laufend erfasst werden und für den Betrieb des Geräts 4 relevant sein können.

Das Informations- und Kommunikationsgerät 4 ist so ausgebildet, dass es die fahrzustandspezifischen Informationen von der Fahrzeugsteuereinheit 12 empfängt und die Mobiltelefoneinheit 5 in Abhängigkeit dieser Informationen steuert. Die fahrzustandspezifischen Informationen können in dem Datenspeicher 8 ähnlich wie die vom Benutzer angegebenen Termine gespeichert werden, es ist jedoch auch möglich, dass die fahrzustandspezifischen Informationen unmittelbar an die Mobiltelefoneinheit 5 übermittelt werden, gegebenenfalls nach einer entsprechenden Abfrage des Geräts 4.

Die unterschiedlichen Termine können verschiedenen Tätigkeitsgruppen wie Besprechung, Autofahrt, Bahnfahrt, Flug, Büro, Freizeit zugeordnet werden. Jeder Tätigkeitsgruppe sind bestimmte Funktionen zur Steuerung der Mobiltelefoneinheit 5 zugeordnet. Um eine noch individuellere Steuerung zu ermöglichen, sind den Tätigkeitsgruppen Untergruppen zugeordnet, die jeweils untergruppenspezifische Funktionen besitzen. Die Untergruppen können vom Benutzer oder automatisch ausgewählt werden.

Die Tätigkeitsgruppe "Autofahrt" kann z.B. in die verschiedenen Untergruppen "Autobahnfahrt, Abbiegen, Spurwechsel, geringer Abstand zu anderen Fahrzeugen" eingeteilt werden, abhängig von der jeweiligen Fahrsituation. Falls die aktuelle Geschwindigkeit größer als 100 km/h ist, kann z.B. die Funktion "Anrufumleitung auf Anrufbeantworter" ausgewählt werden. Es ist jedoch auch möglich, dass diese Funktion nur dann ausgewählt wird, wenn gleichzeitig der Abstand zu einem anderen Fahrzeug kleiner als ein festgelegter Grenzwert ist. Diese fahrzustandspezifischen Informationen erhält das Gerät 4 über die Schnittstelle 11 von der Fahrzeugsteuereinheit 12 und die Steuerung der Mobiltelefoneinheit 5 erfolgt automatisch.

Falls der Fahrer einen Bedienvorgang ausführt, z.B. die Fahrspur wechselt oder an einer Kreuzung abbiegt, ist es ebenfalls zweckmäßig, eingehende Anrufe umzuleiten. Es ist jedoch auch möglich, dem Anrufer eine Sprachnachricht zu übermitteln, da der Wechsel der Fahrspur beziehungsweise ein Abbiegevorgang normalerweise nur wenige Sekunden dauert. Während dieses Vorgangs wird jedoch kein Klingelsignal ausgegeben, um den Fahrer nicht abzulenken und eine Gefährdung zu vermeiden. Nach der Beendigung des Fahrspurwechsels wird ein entsprechendes Signal von der Fahrzeugsteuereinheit 12 an das Gerät 4 gesendet, so dass die Mobiltelefoneinheit 5 entsprechend gesteuert werden kann und das Anrufsignal ausgibt.

Diese fahrzustandspezifische Steuerung des Geräts 4 erhöht die Verkehrssicherheit, da der Fahrer in Situationen mit einem erhöhten Gefährdungsgrad nicht zusätzlich durch das Führen eines Telefongesprächs abgelenkt wird.

## Patentansprüche

1. Informations- und Kommunikationsgerät mit einer Mobiltelefoneinheit und einem Terminkalender zum Speichem und Abrufen von Informationen,
**dadurch gekennzeichnet,**
**dass** die Mobiltelefoneinheit (5) in Abhängigkeit der in dem Terminkalender gespeicherten Informationen steuerbar ist.

2. Informations- und Kommunikationsgerät nach Anspruch 1,
**dadurch gekennzeichnet,**
**dass** eine Information ein Termin ist.

3. Informations- und Kommunikationsgerät nach Anspruch 1 oder 2,
**dadurch gekennzeichnet,**
**dass** einer Information, gegebenenfalls einem Termin, wenigstens eine Funktion zur Steuerung der Mobiltelefoneinheit (5) zuordenbar oder zugeordnet ist.

4. Informations- und Kommunikationsgerät nach einem der vorangehenden Ansprüche,
**dadurch gekennzeichnet,**
**dass** Informationen, gegebenenfalls Termine, in verschiedene Tätigkeitsgruppen klassifizierbar sind und jeder Tätigkeitsgruppe wenigstens eine Funktion zur Steuerung der Mobiltelefoneinheit (5) zugeordnet ist.

5. Informations- und Kommunikationsgerät nach Anspruch 4,
**dadurch gekennzeichnet,**
**dass** eine oder mehrere der folgenden Tätigkeitsgruppen vorgesehen sind: Besprechung, Autofahrt, Bahnfahrt, Flug, Büro, Freizeit.

6. Informations- und Kommunikationsgerät nach Anspruch 4 oder 5,
**dadurch gekennzeichnet,**
**dass** Tätigkeitsgruppen benutzerseitig ergänzt oder geändert werden können.

7. Informations- und Kommunikationsgerät nach einem der Ansprüche 3 bis 6,
**dadurch gekennzeichnet,**
**dass** eine oder mehrere der folgenden Funktionen zur Steuerung der Mobiltelefoneinheit (5) vorgesehen ist bzw. sind: Anrufweiterschaltung, Umleitung auf den Anrufbeantworter, Ausgeben einer Sprachnachricht an den Anrufer, Speichern der Rückrufnummer des Anrufers, Stummschaltung des Anrufsignals, Filterung von Anrufen, Senden einer Textmitteilung an den Anrufer, automatischer Rückruf des Anrufers, automatische Rufannahme, Anpassung der Lautstärke.

8. Informations- und Kommunikationsgerät nach einem der Ansprüche 3 bis 7,
**dadurch gekennzeichnet,**
**dass** die Zuordnung einer Funktion zu einer Tätigkeitsgruppe benutzerseitig einstellbar ist.

9. Informations- und Kommunikationsgerät nach einem der Ansprüche 3 bis 8,
**dadurch gekennzeichnet,**
**dass** Funktionen benutzerseitig programmierbar sind.

10. Informations- und Kommunikationsgerät nach einem der Ansprüche 3 bis 9,
**dadurch gekennzeichnet,**
**dass** eine Tätigkeitsgruppe Untergruppen umfasst, denen untergruppenspezifische Funktionen zuordenbar oder zugeordnet sind.

11. Informations- und Kommunikationsgerät nach einem der Ansprüche 3 bis 10,
**dadurch gekennzeichnet,**
**dass** es für den Betrieb in einem Kraftfahrzeug (10) vorgesehen ist und über eine Schnittstelle (11) Daten mit einer Fahrzeugsteuereinheit (12) austauschen kann.

12. Informations- und Kommunikationsgerät nach Anspruch 11,
**dadurch gekennzeichnet,**
**dass** es zum Empfangen von von der Fahrzeugsteuereinheit (12) gesendeten fahrzustandspezifischen Informationen ausgebildet ist, wobei die Mobiltelefoneinheit (5) in Abhängigkeit der Informationen automatisch steuerbar ist.

13. Informations- und Kommunikationsgerät nach Anspruch 12,
**dadurch gekennzeichnet,**
**dass** die fahrzustandspezifischen Informationen eine oder mehrere der folgenden Informationen umfassen: Geschwindigkeit, Beschleunigung, Verkehrssituation, Abstand zu anderen Fahrzeugen, Bedienvorgänge des Fahrers, Witterungsbedingungen, Lautstärke.

14. Kraftfahrzeug,
**dadurch gekennzeichnet,**
**dass** es ein Informations- und Kommunikationsgerät (4) nach einem der Ansprüche 1 bis 13 umfasst.
